# EUROPÄISCHE PATENTSCHRIFT

(11) **EP 2 905 383 B1**
(45) Veröffentlichungstag und Bekanntmachung des Hinweises auf die Patenterteilung: **13.09.2017**
(21) Anmeldenummer: 15000380.4
(22) Anmeldetag: 10.02.2015
(51) Int. Cl.: E02B 3/24, E06C 9/02, E02B 17/00, E01D 15/24, B32B 7/08, B32B 7/12, B32B 15/08, B32B 15/14

(54) **Bootsanleger an einer Offshore-Anlage mit Anstoßkörper**
Jetty on an offshore structure with impact body
Ponton sur une installation offshore doté de corps de butée

(30) Priorität: 11.02.2014 DE 202014001178 U
(43) Veröffentlichungstag der Anmeldung: 12.08.2015
(73) Patentinhaber: Mare Solutions GmbH, 28199 Bremen (DE)
(72) Erfinder: Tekbas, Franz, 49080 Osnabrück (DE); Paul, Heinz, 27755 Delmenhorst (DE)
(74) Vertreter: Scholz, Volker

(56) Entgegenhaltungen:
- US-A- 2 928 411
- US-A- 3 373 713
- US-A- 4 548 151
- US-A- 5 716 166

## Beschreibung

Die vorliegende Erfindung bezieht sich auf einen Bootsanleger zur Verwendung an einer Offshore-Anlage mit zumindest einem sich in vertikaler Richtung erstreckenden Anstoßkörper aus einem metallischen Werkstoff, wobei der Anstoßkörper im Anstoßbereich eines Bootes eine Schichtlage aus einem Kunststoff und/oder aus einem Fasermaterial aufweist. Ein gattungsgemäßer Bootsanleger ist beispielsweise aus der Schrift DE 10 2012 002 545 A1 bekannt. In dem dort gezeigten Ausführungsbeispiel ist der Anstoßkörper als eine Führungsschiene ausgebildet, gegen die ein Boot mit einem Führungsstück fährt, um den Ein- oder Ausstieg einer Person von einer Plattform oder einer Leiter zum Boot oder andersherum zu ermöglichen. Als Anstoßkörper werden üblicherweise metallische Rohre verwendet, da diese sich auch bei einem stärkeren Anprall eines Bootes nicht so leicht verformen, leicht mit der übrigen Tragkonstruktion einer Offshore-Anlage verbunden werden können, beispielsweise über eine Schweißverbindung, und kostengünstig herstellbar sind.

Aus dem Dokument US 3,373,713 ist ein Bootsanleger bekannt, der die Merkmale des Oberbegriffs von Anspruch 1 aufweist. Damit eine oder mehrere Personen ausreichend Zeit für den Überstieg haben und sich dabei der Abstand zwischen dem Anstoßkörper und dem Boot während des Überstiegs möglichst nicht verändert, läuft der Antrieb des Bootes weiter in Vorwärtsfahrt, um dadurch das Boot mit einer daran ausgebildeten Anstoßfläche gegen den Anstoßkörper gedrückt zu halten. Wenn während des Kontaktes des Bootes mit dem Anstoßkörper Seegang auftritt, reibt die Anstoßfläche des Bootes naturgemäß auf der Oberfläche des Anstoßkörpers mit der Wellenbewegung auf- und abwärts. Aufgrund des hohen Drucks, mit dem die Anstoßfläche des Bootes auf der Außenfläche des Anstoßkörpers reibt, wird dabei eine Schutzlackierung auf der Oberfläche des Anstoßkörpers schnell abgerieben. Danach ist das metallische Material des Anstoßkörpers ungeschützt der Korrosion ausgesetzt. Der Anstoßkörper kann dann sehr schnell verrosten, so dass er bald mit hohem Aufwand ausgetauscht werden müsste.

Es ist die Aufgabe der vorliegenden Erfindung, den Bootsanleger so auszugestalten, dass die Korrosionsgefahr des Anstoßkörpers im Anstoßbereich deutlich verringert wird.

Die Aufgabe wird für einen gattungsgemäßen Anstoßkörper gelöst, indem die Schichtlage mit dem Anstoßkörper durch eine durch einen Klebstoff hergestellte flächige Klebeverbindung verbunden ist. Die Schichtlage aus einem Kunststoff und/oder aus einem Fasermaterial bietet einen guten Schutz gegen einen Abrieb der auf den Anstoßkörper aufgebrachten Farbe mit den Anstoßflächen von anlegenden Booten. Der Kunststoff weist eine ausreichende Zähigkeit und Widerstandsfähigkeit auf, um nicht von den Anstoßflächen von Booten zerstört zu werden, aber auch eine gewisse Flexibilität, um nicht seinerseits die Anstoßflächen der Boote zu beschädigen. Die Langzeitwiderstandsfähigkeit der Schichtlage kann durch die Auswahl eines geeigneten Kunststoffes optimiert werden, der ausreichend widerstandsfähig ist, um den auftretenden Reib- und Scherkräften zu widerstehen, und der eine ausreichende Druck- und Zugfestigkeit aufweist. Um die beabsichtigte Wirkung erzielen zu können, sollte die Schichtlage eine Mindeststärke aufweisen, beispielsweise von 4 mm oder mehr.

Anstelle eines Kunststoffes oder zusätzlich zum Kunststoff können auch ein oder mehrere Fasermaterialien verwendet sein. Als Fasermaterial kommen Kunstfasern, Carbonfasern, Glasfasern oder Basaltfasern, aber beispielsweise auch natürliche Fasern wie beispielsweise Hanf in Betracht. Gute technische Eigenschaften weist auch ein Verbundbauteil auf, das als Borfaser-Verbundbauteil hergestellt ist. Fasermaterialien weisen den Vorteil auf, dass sie punktförmig auf sie einwirkende Kräfte über die Faserlänge und die Vernetzung mit anderen Fasern gut in eine Fläche ein- und abzuleiten vermögen. Dadurch wird das Risiko punktueller Beschädigungen der Schichtlage verringert, und die Kraftübertragung von der Schichtlage über die Klebeverbindung zum Anstoßköper wird dadurch unterstützt. Gute technische Eigenschaften stellen sich beispielsweise ein, wenn eine Matrix aus Vinylesterharz in Kombination mit einem Basaltgewebe für die Schichtlage verwendet wird.

Durch die flächige Klebeverbindung der Schichtlage mit der darunter befindlichen Oberfläche des Anstoßkörpers können auf die Schichtlage einwirkende Kräfte flächig auf den Anstoßkörper übertragen werden. Durch ist eine beschädigungsfreie Übertragung von hohen Kräften möglich. Der Klebstoff bildet zudem im Anstoßbereich eine zusätzliche Schutzschicht für den darunter befindlichen Lack des Anstoßkörpers.

Die Anordnung der Schichtlage im Anstoßbereich eines Bootes bedeutet, dass sich die Schichtlage über eine ausreichende vertikale Höhe des Anstoßkörpers erstrecken sollte. Die Höhe der Schichtlage sollte so bemessen sein, dass sie die Bauhöhe der Anstoßflächen der in Betracht kommenden Boote und den möglichen Tidenhub im Seegebiet, in dem die Offshore-Anlage aufgestellt ist, ausreichend berücksichtigt. Die Breite der Schichtlage sollte so bemessen sein, dass die Oberfläche des Anstoßkörpers, an der Anstoßflächen von Booten anstoßen können, ausreichend abgedeckt und geschützt ist.

Nach einer Ausgestaltung der Erfindung ist die Schichtlage als Formkörper ausgestaltet, der den Anstoßkörper im Anstoßbereich zumindest zur Hälfte des Umfangs umfasst. Vorteilhaft ist das Formteil so geformt, dass es sich mit seiner Form formschlüssig oder wenigstens annähernd formschlüssig auf die Außenform des Anstoßkörpers auflegen lässt. Bei einem rohrförmigen Anstoßkörper ergibt sich also auch für die Schichtlage eine zumindest teilzylindrische Grundform, deren Innenradius zumindest annähernd dem Außenradius des Anstoßkörpers entspricht. Bei einer zumindest hälftigen Umfassung des Umfangs kann derjenige Anstoßbereich des Anstoßkörpers, an dem ein Kontakt mit einer Anstoßfläche eines anlegenden Bootes mit hoher Wahrscheinlichkeit zu erwarten ist, ausreichend abgedeckt werden. Bei einer zumindest hälftigen Umfassung kann der Anstoßbereich zudem zumindest ohne eine vertikale Naht zwischen mehreren benachbarten Schichtlagen abgedeckt werden. Bei Nahtbereichen, die einer besonderen mechanischen Belastung unterliegen, wie das im Anstoßbereich von Booten der Fall ist, besteht das Risiko, dass sich der Klebstoff vom Anstoßkörper und/oder von der Schichtlage ablösen könnte. Umfasst der Formkörper der Schichtlage mehr als die Hälfte des Umfangs des Anstoßkörpers, so muss der Formkörper bei seiner Anbringung leicht aufgebogen werden, damit die seitlichen Enden des Formkörpers über den Durchmesser des Anstoßkörpers gleiten und diesen dann mit ihren seitlichen Enden hintergreifen können. Bei einer solchen Ausbildung ergeben sich zusätzliche Flächen zur Verklebung mit dem Anstoßkörper und ein zusätzlicher mechanischer Halt durch das Hintergreifen. Bei einer Ausbildung der Schichtlage als Formteil kann die Montage vereinfacht und beschleunigt werden, da eine Vormontage an Land möglich ist und am Einbauort nur noch die Klebstoffschicht aufgebracht und das Formteil in seine Einbaulage verbracht werden muss.

Nach einer Ausgestaltung der Erfindung weist die Schichtlage eine mehrlagige Faserverstärkung auf. Durch eine mehrlagige Faserverstärkung ist die Stabilität und Widerstandsfähigkeit der Schichtlage verbessert. So kann beispielsweise ein 10-fache Lage eines Basaltgewebes mit einer Stärke von 400 g/m² in der Schichtlage bei einer gesamten Materialstärke der Schichtlage von 5 mm verarbeitet sein.

Nach einer Ausgestaltung der Erfindung ist in die Schichtlage eine metallische Verstärkung einlaminiert. Durch eine metallische Verstärkung werden die mechanischen Eigenschaften der Schichtlage und ihre Schutzwirkung für den Anstoßkörper nochmals verbessert.

Nach einer Ausgestaltung der Erfindung sind die seitlichen Ränder der Schichtlage durch eine oder mehrere den Anstoßkörper umfassende Spannschellen miteinander verbunden. Durch die Spannschellen wird die Stabilität und Fixierung der Schichtlage nochmals verbessert.

Nach einer Ausgestaltung der Erfindung ist für die Klebeverbindung ein 2-Komponenten-Klebstoff verwendet. Durch den 2-Komponenten-Klebstoff werden kurze Aushärtezeiten erreicht, die bei den kurzen tidenbedingten Montagezeitfenstern vorteilhaft sind. Auch kann der Klebstoff genau an die technischen Anforderungen angepasst werden.

Es wird ausdrücklich darauf hingewiesen, dass die vorstehend erläuterten vorteilhaften Ausgestaltungen jeweils mit dem Gegenstand des Hauptanspruchs, aber auch mit anderen vorteilhaften Ausgestaltungen beliebig kombinierbar sind, soweit dem nicht technische Hinderungsgründe entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Schrägansicht auf einen Bootsanleger an einer Offshore-Anlage,
- Fig. 2:: eine Frontalansicht des Bootsanlegers von vorne, und
- Fig. 3:: eine Seitenansicht.

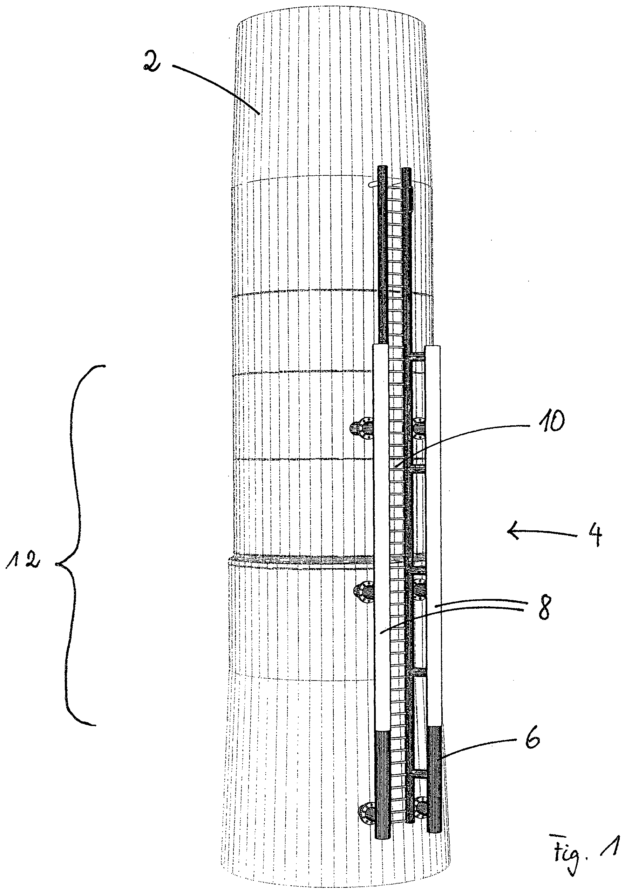

In Fig. 1 ist ein Pile 2 einer Offshore-Anlage zu sehen. Bei dem Pile kann es sich um den Schaft einer Windkraftanlage handeln. Der Pile kann allerdings auch ein Fuß eines Tripods oder einer anderen Offshore-Anlage sein. In einem Bereich des Piles ist ein Bootsanleger 4 ausgebildet.

Im Ausführungsbeispiel verfügt der Bootsanleger 4 über zwei Anstoßkörper 6, die als vertikal angeordnete Rohre ausgebildet sind. Über eine Höhe, die den Anstoßbereich 12 abdeckt, sind an den beiden Anstoßkörpern 6 jeweils eine Schichtlage 8 befestigt. Die Schichtlage 8 ist an den Anstoßkörpern 6 so ausgerichtet, dass sie den Anstoßkörper 6 gegen ein anlandendes Boot schützt und die empfindlichen lackierten Oberflächen abdeckt. Wenn ein Boot gegen den Anstoßkörper 6 stößt, kann eine Person vom Boot auf die Leiter 10 gelangen. Über die Leiter 10 kann eine Person dann in einen Bereich des Piles 2 gelangen, von wo aus die Offshore-Anlage betreten oder gewartet werden kann.

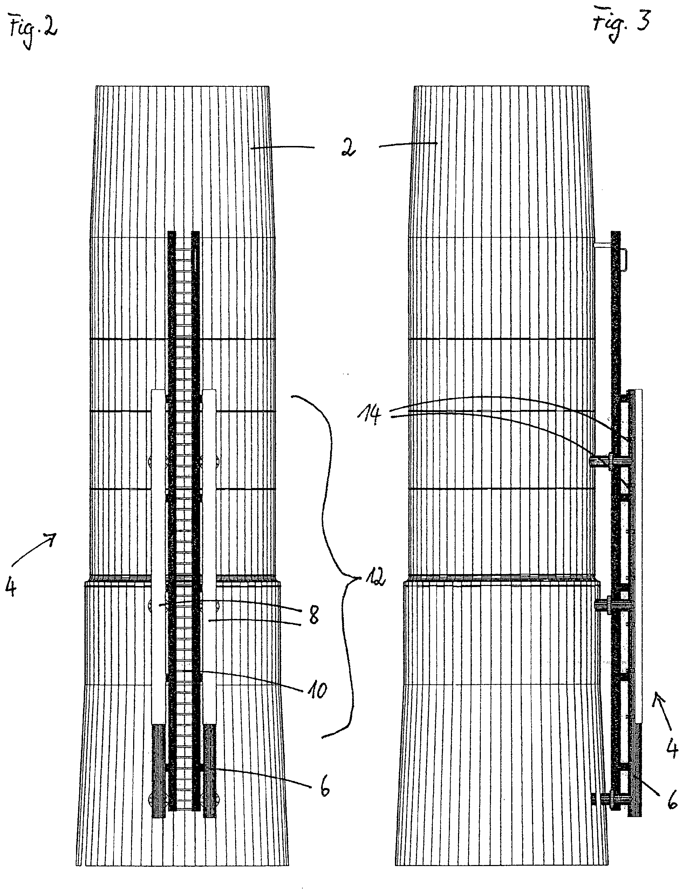

In der in Fig. 2 gezeigten Frontalansicht auf dem Bootsanleger 4 ist erkennbar, dass die sich im Anstoßbereich 12 befindlichen Schichtlagen 8 die durch einen Bootsanstoß gefährdeten Oberflächen der Anstoßkörper 6 gut abdecken. In der in Fig. 3 dargestellten Seitenansicht ist erkennbar, dass die Schichtlagen 8 nicht vollständig um die Anstoßkörper 6 im Anstoßbereich 12 herumgeführt sind, sondern nur etwa hälftig. Die seitlichen Enden der Schichtlagen 8 werden in dem dem Pile 2 zugewandten Bereich zusätzlich durch eine Anzahl von Spannschellen 14 in ihrer Einbaulage fixiert.

Zeichnerisch nicht näher dargestellt, aber wesentlich für die Verbindung der Schichtlagen 8 mit den Anschlusskörpern 6 ist die Klebeverbindung zwischen beiden Bauteilen. Über die Klebeverbindung können auf die Schichtlagen 8 bei einem Bootsanstoß einwirkenden Kräfte gut auf die Anstoßkörper 6 übertragen werden.

## Patentansprüche

1. Bootsanleger (4) zur Verwendung an einer Offshore-Anlage mit zumindest einem sich in vertikaler Richtung erstreckenden Anstoßkörper (6) aus einem metallischen Werkstoff, wobei der Anstoßkörper (6) im Anstoßbereich (12) eines Bootes eine Schichtlage (8) aus einem Kunststoff und/oder aus einem Fasermaterial aufweist, **dadurch gekennzeichnet, dass** die Schichtlage (8) mit dem Anstoßkörper (6) durch eine durch einen Klebstoff hergestellte flächige Klebeverbindung verbunden ist.

2. Bootsanleger (4) nach Anspruch 1, **dadurch gekennzeichnet, dass** die Schichtlage (8) als Formkörper ausgestaltet ist, der den Anstoßkörper (6) im Anstoßbereich (12) zumindest zur Hälfte des Umfangs umfasst.

3. Bootsanleger (4) nach Anspruch 1 oder 2, **dadurch gekennzeichnet, dass** die Schichtlage (8) eine mehrlagige Faserverstärkung aufweist.

4. Bootsanleger (4) nach einem der vorhergehenden Ansprüche, **dadurch gekennzeichnet, dass** in die Schichtlage (8) eine metallische Verstärkung einlaminiert ist.

5. Bootsanleger (4) nach einem der vorhergehenden Ansprüche, **dadurch gekennzeichnet, dass** die seitlichen Ränder der Schichtlage (8) durch eine oder mehrere den Anstoßkörper (6) umfassende Spannschellen (14) miteinander verbunden sind.

6. Bootsanleger (4) nach einem der vorhergehenden Ansprüche, **dadurch gekennzeichnet, dass** für die Klebeverbindung ein 2-Komponenten-Klebstoff verwendet ist.

## Claims

1. Jetty (4) for use on an offshore structure with at least one impact body (6) extending in the vertical direction made of a metallic material, wherein the impact body (6) in the impact region (12) of a boat has a sheet layer (8) made of a plastic and/or fibrous material, **characterized in that** the sheet layer (8) is connected to the impact body (6) by a planar adhesive joint produced from an adhesive.

2. Jetty (4) according to claim 1, **characterized in that** the sheet layer (8) is formed as molded body, which spans at least half the volume of the impact body (6) in the impact region (12).

3. Jetty (4) according to claim 1 or 2, **characterized in that** the sheet layer (8) has multilayer fibrous reinforcement.

4. Jetty (4) according to any one of the above claims, **characterized in that** metallic reinforcement is laminated into the sheet layer (8).

5. Jetty (4) according to any one of the above claims, **characterized in that** the lateral edges of the sheet layer (8) are connected together by one or several clamping collars (14) comprising the impact body (6).

6. Jetty (4) according to any one of the above claims, **characterized in that** a 2-component glue is used for the adhesive joint.

## Revendications

1. Ponton (4) destiné à une utilisation sur une installation offshore doté d'au moins un corps de butée (6) s'étendant dans le sens vertical et constitué d'un matériau métallique, dans lequel le corps de butée (6) présente une couche de revêtement (8) constituée d'une matière plastique et/ou d'un matériau fibreux au niveau de la partie de butée (12) d'un bateau, **caractérisé en ce que** la couche de revêtement (8) est reliée au corps de butée (6) par une liaison adhésive plate faite à partir d'une colle.

2. Ponton (4) selon la revendication 1, **caractérisé en ce que** la couche de revêtement (8) est agencée comme un corps moulé qui entoure le corps de butée (6) au niveau de la partie de butée (12) sur au moins la moitié de sa circonférence.

3. Ponton (4) selon la revendication 1 ou 2, **caractérisé en ce que** la couche de revêtement (8) présente un renfort fibreux en plusieurs couches.

4. Ponton (4) selon l'une des revendications précédentes, **caractérisé en ce qu'**un renfort métallique est introduit par stratification dans la couche de revêtement (8).

5. Ponton (4) selon l'une des revendications précédentes, **caractérisé en ce que** les bords latéraux de la couche de revêtement (8) sont liés les uns aux autres par un ou plusieurs colliers de serrage (14) entourant le corps de butée (6).

6. Ponton (4) selon l'une des revendications précédentes, **caractérisé en ce qu'**une colle bi-composante est utilisée pour la liaison adhésive.
